# EUROPÄISCHE PATENTSCHRIFT

(11) **EP 2 948 286 B1**
(45) Veröffentlichungstag und Bekanntmachung des Hinweises auf die Patenterteilung: **02.09.2020**
(21) Anmeldenummer: 14721751.7
(22) Anmeldetag: 17.01.2014
(51) Int. Cl.: B29C 44/60, B29C 44/34

(54) **VERFAHREN ZUR HERSTELLUNG EINES SCHAUMPRODUKTS SOWIE VORRICHTUNG HIERFÜR**
METHOD FOR PRODUCING A FOAM PRODUCT, AND DEVICE THEREFOR
PROCÉDÉ DE FABRICATION D'UN PRODUIT ALVÉOLAIRE ET DISPOSITIF À CET EFFET

(30) Priorität: 28.01.2013 DE 102013001410
(43) Veröffentlichungstag der Anmeldung: 02.12.2015
(73) Patentinhaber: VAN LÜCK, Frank, 47877 Willich (DE)
(72) Erfinder: VAN LÜCK, Frank, 47877 Willich (DE)
(74) Vertreter: Kilian Kilian & Partner
(86) Internationale Anmeldenummer: PCT/EP2014/000126
(87) Internationale Veröffentlichungsnummer: WO 2014/114437

(56) Entgegenhaltungen:
- EP-A1- 0 925 900
- EP-A1- 2 397 303
- US-A- 3 121 130
- US-A- 4 435 345
- US-A1- 2001 039 299
- US-A1- 2005 161 855
- US-A1- 2006 071 369

## Beschreibung

### Gebiet der Erfindung

Die vorliegende Erfindung betrifft das Gebiet der Extrusionstechnik und insbesondere das Gebiet der Schaumextrusion.

### Stand der Technik

Es ist bekannt, zur Herstellung von Schaumprodukten einen Extruder zu verwenden, in dem eine Kunststoffmasse aufgeschmolzen wird. Der aufgeschmolzene Kunststoff innerhalb des Extruders, der auch Extrudat genannt wird, wird innerhalb des Extruders mit Treibmittel unter hohem Druck versetzt und durch eine formgebende Öffnung des Extruders gepresst. Die formgebende Öffnung wird von einem Extrusionswerkzeug vorgesehen, das sich an demjenigen Ende des Extruders befindet, zu dem der Extruder das Extrudat hin fördert. Nach dem Verlassen des Extrusionswerkzeugs entspannt sich das Treibmittel und es entsteht eine geschäumte Masse, die dadurch erstarrt, dass die geschäumte Masse aus dem Extrusionswerkzeug in einen Raum gefördert wird, dessen Temperatur deutlich unter dem Schmelzpunkt des Kunststoffs liegt, beispielsweise bei Raumtemperatur. Durch das Abkühlen wird das Zellenwachstum beendet, wobei insbesondere bei der Herstellung von geschlossenporigen Produkten das Beenden des Zellwachstums durch Abkühlen verhindert, dass Zellen aufplatzen. Die erstarrte Masse wird konfektioniert und es ergibt sich das Schaumprodukt.

Die Druckschrift DE 20117403 U1 beschreibt einen Kühldorn, der eine geschäumte Masse nach dem Austritt aus einem Extrusionswerkzeug kühlt, um ein Schaumprodukt zu erzeugen.

Zudem offenbaren die Druckschriften EP 2397303 A1 und US 3121130 A ein Verfahren gemäß Oberbegriff des Patentanspruches 1 und eine Vorrichtung gemäß Oberbegriff des Patentanspruches 6.

Die Druckschrift US 2006/071369 A1 zeigt eine Vorrichtung, die aus zwei übereinanderliegenden Förderbändern aufgebaut ist, die an den Austritt eines Extrusionswerkzeuges angeschlossen werden kann. Zwischen den zwei übereinanderliegenden Förderbändern wird das Extrudat aufgeschäumt und erstarrt, wobei die Förderbänder geheizt/gekühlt werden können.

Für zahlreiche Anwendungen, etwa für Schaumprodukte zur Schall- oder Wärmeisolation, ist es jedoch wünschenswert, ein Schaumprodukt zur Verfügung zu haben, das eine geringere Dichte aufweist, als es sich mit herkömmlichen Verfahren erreichen lässt. Es ist daher eine Aufgabe der Erfindung, eine Möglichkeit aufzuzeigen, mit der ein Schaumprodukt mit einer geringeren Dichte hergestellt werden kann.

### Offenbarung der Erfindung

Diese Aufgabe wird gelöst durch die Gegenstände der unabhängigen Ansprüche. Weitere Vorteile ergeben sich mit den Merkmalen der abhängigen Ansprüche.

Es wurde erkannt, dass das unmittelbare Abkühlen nach dem Austritt aus dem Extrusionswerkzeug das Zellwachstum nicht optimal gestaltet und dass insbesondere eine geringere Dichte erzielt werden kann, wenn zur Homogenisierung der Zellengröße im Querschnitt einer geschäumten Masse, die aus einem Extrusionswerkzeug austritt, die Masse noch in einem nicht vollständig erstarrten Zustand gehalten wird. Es wurde ferner erkannt, dass eine Nachexpansion einer bereits erstarrten Masse zwar zu einer Verringerung der Dichte führt, wobei jedoch eine gezielte Verzögerung des Erstarrens unmittelbar nach dem Austritt aus dem Extrusionswerkzeug zu geringeren Dichten führt. Indem die Zellstruktur des Produktes gezielt beeinflusst werden kann, bleiben trotz der niedrigeren Dichte die gewünschten Schaumprodukteigenschaften erhalten.

Es ist wird daher ein Verfahren zur Herstellung eines extrudierten Schaumprodukts beschrieben, wobei ein mit zumindest einem Treibmittel versetztes Extrudat durch ein Extrusionswerkzeug geführt wird. Das Extrudat wird nach Austritt aus dem Extrusionswerkzeug durch das Treibmittel zu einer geschäumten Masse aufgeschäumt. Ein Erstarren der aus dem Extrusionswerkzeug austretenden geschäumten Masse innerhalb einer Temperierungszone wird verhindert durch Temperieren der geschäumten Masse innerhalb der Temperierungszone. Die Temperierungszone schließt sich hierbei an das Extrusionswerkzeug an. Insbesondere wird ein oberflächliches, randschichtiges und ein vollständiges Erstarren verhindert. Dadurch können Ausgleichprozesse zwischen den Zellen der geschäumten Masse innerhalb der Temperierungszone stattfinden, so dass sich Zellgrößen ausgleichen können und sich eine homogenere Zellstruktur ergibt, insbesondere eine Angleichung der Zellstruktur von in der Nähe der äußeren Oberfläche liegenden Zellen gegenüber weiter innen liegenden Zellen der geschäumten Masse. Die Randschicht ist die äußerste Schicht der geschäumten Masse und hat eine höhere Dichte als weiter innen liegende Bereiche. Die Randschicht umfasst oder ist definiert durch die äußerste Schicht, in der die Dichte der geschäumte Masse um einen Faktor von mindestens 20%, 40%, 60%, 80%, 100%, 125%, 150%, 175%, 200%, 300% und vorzugsweise von mindestens 25%, 50%, 75%, 100% größer als die Dichte in weiter innen liegenden Bereichen der geschäumten Masse. Weiterhin kann die Randschicht anhand ihrer Dicke definiert werden, mit der sie von der äußeren Oberfläche aus in weiter innen liegende Bereiche des geschäumten Masse hineinragt. Die Randschicht hat vorzugsweise eine Dicke von mindestens 0.2, 0.4, 0.6, 0.8, 1.0, 1.2, 1.4, 1.6, 1.8, 2.0, 2.2, 2.4, 2.6, 2.8, 3.0, 3.5, 4, 4.5, 5, 6, 7, 8, 9 oder 10 Millimeter und bevorzugt von mindestens 0.2, 0.5, 1, 2, 5 oder 10 Millimeter. Die Randschicht kann ferner eine Dicke aufweisen von nicht mehr als 30, 20 oder 15 Millimeter. Je nach Herstellverfahren, Anwendung, Treibmittel, Treibmitteldruck und Kunststoffart kann diese Dicke variieren. Insbesondere bei der Herstellung von Dämmplatten, die aus dem geschäumten Kunststoff entstehen, beträgt die Dicke üblicherweise mindestens 2 mm. Zudem kann die Randschicht anhand ihrer relativen Dicke bezogen auf die Dicke der geschäumten Masse definiert werden. Die Dicke der Randschicht beträgt vorzugsweise mindestens 1%, 2%, 3%, 4%, 5%, 10%, 15%, 20% oder 25% und bevorzugt von mindestens 2%, 5% oder 10% der Dicke des geschäumten Materials. Die Randschicht kann ferner eine Dicke aufweisen von nicht mehr als 50 % oder 40 % der Dicke des geschäumten Materials. Wie erwähnt kann je nach Herstellverfahren, Anwendung, Treibmittel, Treibmitteldruck und Kunststoffart diese Dicke variieren. Insbesondere bei der Herstellung von Dämmplatten, die aus dem geschäumten Kunststoff entstehen, beträgt die Dicke üblicherweise mindestens 5 % und nicht mehr als 20 % der Dicke des geschäumten Materials. Die Dicke des geschäumten Materials entspricht insbesondere dem Abstand zwischen zwei gegenüberliegenden äußeren Oberflächen.

Es ist vorgesehen, dass ein Extrudat, welches zumindest einen Kunststoff umfasst, aufgeschmolzen wird und mit mindestens einem Treibmittel versetzt wird. Dies kann insbesondere in einem Hohlzylinder eines Extruders stattfinden, wobei abhängig von Treibmittel dieses auch vor der Eingabe in den Extruder dem Extrudat beigefügt werden kann. Das Extrudat wird zusammen mit dem Treibmittel in dem Extruder aufgeschmolzen. In dem Extruder wird das sich ergebende Gemisch ferner gefördert. Hierzu kann der Extruder ein, zwei oder mehr als zwei Fördervorrichtungen aufweisen, insbesondere Förderschnecken. Die Fördervorrichtung erzeugt eine Förderrichtung, die das Extrudat zusammen mit dem Treibmittel zu dem Extrusionswerkzeug führt und durch dieses presst. Nach dem Durchtritt durch das Extrusionswerkzeug entspannt sich das Treibmittel, da der Druck vor dem Extrusionswerkzeug größer ist als nach dem Extrusionswerkzeug. Diese Angabe bezieht sich auf die Förderrichtung. Insbesondere kann das Treibmittel nach dem Durchtritt durch das Extrusionswerkzeug teilweise oder vollständig einen Phasenübergang aufweisen, beispielsweise von der flüssigen Phase zur gasförmigen Phase. Durch das Entspannen und insbesondere durch den Phasenübergang wird dem Extrudat, das aus dem Extrusionswerkzeug als die bereits erwähnte geschäumte Masse austritt, Wärme entzogen. Die hier beschriebene Vorgehensweise kann das damit verbundene Abkühlen zumindest teilweise kompensieren, wobei das Temperieren ein Erstarren der Oberfläche oder Randschicht der geschäumten Masse und auch ein Erstarren von weiter innen liegenden Bereichen der geschäumten Masse durch das Expandieren und/oder durch den Phasenübergang des Treibmittels verhindert. Hierbei entspricht die hier bezeichnete Oberfläche der äußeren Oberfläche, wie es hierin definiert ist. Die Randschicht ist die äußere Schicht der geschäumten Masse, die die äußere Oberfläche umfasst und einen Anteil der Gesamtdicke der geschäumten Masse ausmacht, beispielsweise wie er weiter oben definiert ist. Ein randschichtiges Erstarren ist ein Erstarren nur der Randschicht. Abhängig von der Temperatur des Extrudats innerhalb des Extruders, von der Erstarrungstemperatur bzw. dem Erstarrungstemperaturbereich und von der Wärmemenge, die durch das Expandieren bzw. durch den Phasenübergang der geschäumten Masse entzogen wird, kann der geschäumten Masse Wärme in der Temperierungszone zugeführt oder abgeführt werden, wobei die so abgeführte oder zugeführte Wärmemenge die geschäumten Masse mit einer Temperatur vorsieht, in der diese vorzugsweise nicht vollständig flüssig ist (um ein Aufplatzen zu verhindern) und nicht vollständig erstarrt ist. In der Temperierungszone wird die geschäumten Masse auf einer Temperatur (oder auf einem Temperaturverlauf entlang der Förderrichtung oder auf einem Temperaturintervall) gehalten, die die geschäumte Masse zwischen einem vollständig flüssigen und einem vollständig erstarrten Zustand hält. Die geschäumte Masse wird innerhalb der Temperierungszone in einem plastisch durch das Treibmittel verformbaren Zustand gehalten. Die geschäumte Masse wird ferner innerhalb der Temperierungszone in einem nicht vollständig flüssigen Zustand gehalten, in dem der Druck des Treibmittels nicht ausreicht, um die sich durch das Aufschäumen ergebenden Zeilen zum Zerplatzen zu bringen.

In der Temperierungszone wird die geschäumte Masse mit einem Temperaturverlauf über den Querschnitt der geschäumten Masse versehen, der an der äußeren Oberfläche der geschäumten Masse Temperaturen vorsieht, mit denen die Masse zwar plastisch verformbar bleibt, jedoch ein Aufplatzen der Zellen der geschäumten Masse an der äußeren Oberfläche verhindert. Der Temperaturverlauf sieht für innere Zonen der Masse Temperaturen vor, die eine Verformung der Zellen ermöglicht und insbesondere eine Verschiebung von Wänden zwischen benachbarten Zellen ermöglicht. Diese Temperaturen sind abhängig von den plastischen Eigenschaften der geschäumten Masse und beispielsweise auch von der Verweildauer der Masse innerhalb der Temperierungszone und können ohne weiteres durch Regelung der Wärmezufuhr oder Wärmeabfuhr innerhalb der Temperierungszone ermittelt werden. Innerhalb der Temperierungszone kann die geschäumte Masse auf eine Temperatur (oder auf einen Temperaturverlauf) temperiert werden, der nicht mehr als 20K, 10K, 5K oder 1K über der Schmelztemperatur oder der oberen Schmelztemperatur der Masse liegt. Ferner kann innerhalb der Temperierungszone kann die geschäumte Masse auf eine Temperatur (oder auf einen Temperaturverlauf) temperiert werden, der nicht mehr als 20K, 10K, 5K oder 1K unter der Schmelztemperatur oder der unteren Schmelztemperatur der geschäumten Masse liegt. Insbesondere bei Kunststoffgemischen als Extrudat kann die geschäumte Masse einen Schmelzbereich aufweisen, der sich von der unteren bis zur oberen Schmelztemperatur erstreckt. Die Temperatur, auf die die geschäumte Masse temperiert wird, kann auch zwischen der unteren und der oberen Schmelztemperatur liegen, vorzugsweise nicht mehr als 10K, 5K oder 2K über der unteren Schmelztemperatur.

Die Temperierungszone, innerhalb der das Temperieren stattfindet, kann sich unmittelbar an das Extrusionswerkzeug anschließen. Ferner kann sich die Temperierungszone über eine Zwischenstrecke an das Extrusionswerkzeug anschließen, wobei die geschäumte Masse vorzugsweise innerhalb der Zwischenstrecke mit einer Temperatur über einer Mindesttemperatur vorgesehen ist. Die Mindesttemperatur liegt vorzugsweise über einer Temperatur, bei der die geschäumte Masse oberflächlich, randschichtig oder vollständig erstarrt, kann jedoch auch beispielsweise 5K, 10K, 20K oder 30K unter dieser Temperatur liegen. Dies kann insbesondere nur für die äußere Oberfläche der geschäumten Masse zutreffen, wobei innere Zonen der geschäumten Masse mangels Abkühlungseffekte an der äußeren Oberfläche eine höhere Temperatur aufweisen können als die äußere Oberfläche der geschäumten Masse. Die Verweildauer und Temperatur bzw. Temperaturverteilung innerhalb der Zwischenstrecke hängt insbesondere von der Dichte der geschäumten Masse, von der Wärmekapazität der geschäumten Masse, sowie von Expansionsprozessen innerhalb der geschäumten Masse ab, die wiederum von der Konzentration bzw. dem Druck des Treibmittels abhängen. Die Temperatur und die Verweildauer der Zwischenstrecke sind derart gewählt, dass in der direkt darauf folgenden Temperierungszone die geschäumte Masse in einen zumindest teilweise plastisch verformbaren Zustand überführt werden kann, wie er oben beschrieben ist. Nach dem Verlassen der Temperierungszone ist die geschäumte Masse vollständig erstarrt und wird zu einem Schaumkörper. Der Schaumkörper selbst entspricht dem herzustellenden Schaumprodukt, oder entspricht in geschnittener Form dem herzustellenden Schaumprodukt, oder entspricht einer Vorform des herzustellenden Schaumprodukts, das sich durch weitere Verarbeitungsschritte aus dem Schaumkörper ergibt.

In einer Ausführungsform des Verfahrens sehen eine Dauer und/oder ein Temperaturverlauf des Temperierens einen Druckausgleich zwischen geschlossenen Zellen unterschiedlicher Querschnittsposition durch plastische Änderung der Zellen vor. Mit anderen Worten wird die Dauer und/oder der Temperaturverlauf (in Förderrichtung) derart vorgesehen, dass weiter innen liegende Zonen in der geschäumten Masse Zellen aufweisen, die durch das Treibmittel innerhalb der Temperierungszone expandieren können, und dass durch die Expansion weiter innen liegender Zonen Zellen in weiter außen liegenden Zonen nach außen verschoben werden können oder Zellwände nach außen wandern können. Nach außen bedeutet hier eine zur äußeren Oberfläche gerichtete Richtung, insbesondere eine radiale Richtung der geschäumten Masse. Weiter innen und weiter außen sind Positionsbezeichnungen, die lediglich eine relative Position von Zonen der geschäumten Masse betreffen. Durch das Temperieren wird ein Ausgleich der Zellengrößen von Zellen unterschiedlicher radialer Position innerhalb der geschäumten Masse unterstützt. Dieser Ausgleich wird gegenüber einem nicht temperierenden Verfahren durch das erfindungsgemäße Verfahren zeitlich verlängert, wodurch sich eine Homogenisierung der Dichte innerhalb des Querschnitts der geschäumten Masse ergibt.

Eine weitere Ausführungsform sieht vor, dass eine Dauer und/oder ein Temperaturverlauf des Temperierens und/oder ein von dem Treibmittel vorgesehener Druck ein Aufplatzen von Zellen an einer äußeren Oberfläche der geschäumten Masse verhindert. Insbesondere ist eine Temperierungsanordnung, die die Temperierungszone vorsieht, hinsichtlich der Temperierung derart ausgelegt, dass innerhalb der Temperierungszone Zellen an der äußeren Oberfläche nicht aufplatzen. Ferner kann die Temperierungsanordnung derart angesteuert werden, dass innerhalb der Temperierungszone Zellen an der äußeren Oberfläche nicht aufplatzen. Ferner kann ein Steuergerät vorgesehen werden, welches die Temperierungsanordnung ansteuert, dass innerhalb der Temperierungszone Zellen an der äußeren Oberfläche nicht aufplatzen. Die Temperierungsanordnung und/oder das Steuergerät können an das Treibmittel, an das Material des Extrudats und/oder an die Fördergeschwindigkeit der geschäumten Masse angepasst sein, und kann abhängig von diesen eingestellt werden, um ein Aufplatzen dieser Zellen zu verhindern. Als Aufplatzen von Zellen an der äußeren Oberfläche wird vorzugsweise das Aufplatzen von mehr als 1/10000, 1/1000, 1/100, 1/50, 1/20, 1/10 oder 1/5 aller Zellen bezeichnet, die mindestens eine Seitenwand aufweisen, die Teil der äußeren Oberfläche der geschäumten Masse ist.

Weitere Ausführungsformen sehen vor, dass während dem Temperieren der geschäumten Masse Wärme zugeführt oder von dieser abgeführt wird. Zudem kann an einer ersten Stelle der Temperierungszone Wärme zugeführt werden und an einer zweiten dazu verschiedenen Zelle Wärme abgeführt werden. Wärme kann zu- oder abgeführt werden durch körperlichen Kontakt zwischen der geschäumten Masse und einer Oberfläche, an der die geschäumte Masse vorbeigeführt wird. Es ergibt sich ein Wärmeübertrag durch den direkten körperlichen Kontakt sowie insbesondere durch Übertragung von Wärmestrahlung zwischen der geschäumten Masse und der Oberfläche. Ferner kann Wärme kann zu- oder abgeführt werden durch Führen einer Temperierungsströmung entlang der geschäumten Masse. Die Temperierungsströmung umfasst ein Temperierungsfluid, vorzugsweise Gas oder auch eine Flüssigkeit. Das Temperierungsfluid wird vor dem Führen entlang der Masse vorzugsweise erwärmt oder gekühlt. Insbesondere kann erwärmte Luft verwendet werden. Die Strömung kann mit einer Pumpe erzeugt werden. Die Strömung kann durch ein Strömungsführungselement geführt werden, etwa mittels einer Prallplatte oder mittels eines Diffusors. Zudem kann Wärme kann zugeführt werden durch Bestrahlen mit Wärmestrahlung oder Mikrowellenstrahlung. Hierbei kann ein Heizelement innerhalb der Temperierungszone auf die geschäumte Masse gerichtet sein. Alternativ oder in Kombination hierzu kann ein Mikrowellenstrahler auf die Masse gerichtet sein.

Bei der Verwendung eines Extrusionswerkzeugs mit einem Öffnungsquerschnitt, der einen ungeöffneten inneren Bereich umfänglich umschließt, oder der einen Einschnitt aufweist, etwa im Falle einer Rundschlitzdüse oder einer Düse mit U-förmigen Spalt, ergibt sich eine geschäumte Masse, die eine nicht nach außen gerichtete (Teil-)Oberfläche aufweist. Auch diese Oberfläche wird - neben der nach außen weisenden Oberfläche der geschäumten Masse - als äußere Oberfläche bezeichnet und kann wie hier beschrieben durch Wärmezufuhr oder Wärmeabfuhr temperiert werden. Der körperliche Kontakt, die Temperierungsströmung oder das Bestrahlen kann also auch an einer Innenseite der geschäumten Masse stattfinden. Als äußere Oberfläche wird die Fläche bezeichnet, welche eine Grenzfläche der Masse zu der Atmosphäre bildet. Umschließt die geschäumten Masse einen Bereich, der nicht mit geschäumter Masse ausgefüllt ist, so bildet die Grenzfläche zwischen Masse und Bereich einen Teil der äußeren Oberfläche. Die innere Oberfläche betrifft die Fläche der Zellwände von Zellen innerhalb der geschäumten Masse und insbesondere alle Oberflächen, die in der geschäumten Masse enthalten sind. Die äußere Oberfläche entspricht insbesondere der restlichen Fläche, Es können bei derartigen geschäumten Massen mit hohlem Querschnitt, wie es vorangehend beschrieben ist, Wärmeabfuhrelemente oder Wärmezufuhrelemente der Temperierungsanordnung oder die Temperierungsanordnung innerhalb des Bereichs vorgesehen sein, der nicht mit der geschäumten Masse ausgefüllt ist. Insbesondere kann ein Strömungsführungselement oder eine zu kontaktierende wärmeabführende oder wärmezuführende Oberfläche oder auch ein Heizelement oder ein Mikrowellenstrahler in diesem Bereich vorgesehen sein. Die geschäumten Masse wird an diesen Komponenten (außen) vorbeigeführt.

Die Erfindung betrifft das Ausüben von Druck auf die geschäumte Masse bzw. auf deren äußere Oberfläche. Es wird auf die geschäumte Masse Anpressdruck ausgeübt, die dem Druck des Treibmittels entgegenwirkt. Es wurde vorangehend beschrieben, dass durch entsprechende Temperierung eine Homogenisierung der Dichte über den Querschnitt ermöglicht wird. Ferner wird hier erläutert, dass diese Temperierung - insbesondere die Verweildauer in der Temperierungszone und/oder die Temperatur bzw. der Temperaturverlauf - auch verwendet wird, ein Aufplatzen von Zellen an der äußeren Oberfläche zu verhindern. Im Folgenden wird eine weitere Möglichkeit aufgezeigt, mit der ein Aufplatzen an der geschäumten Masse an der äußeren Oberfläche verhindert werden kann.

Gemäß dem erfindungsgemäßen Verfahrens wird innerhalb der Temperierungszone ein Anpressdruck auf eine äußere Oberfläche der geschäumten Masse ausgeübt. Die geschäumte Masse wird entlang einer Oberfläche geführt, die den Anpressdruck auf die äußere Oberfläche der geschäumten Masse ausübt. Durch das Führen wird die geschäumte Masse unter Ausüben einer Kraft in einer bestimmten Weise geführt, so dass die Oberfläche, entlang der die Masse geführt wird, den Anpressdruck ausüben kann. Die Oberfläche wird von einem Festkörper gebildet. Die Oberfläche wird durch das Führen nicht verformt und ist in diesem Sinne starr. In Kombination hierzu kann ein Anpressdruck von einer Flüssigkeit oder einem Gas ausgeübt werden, das als Strömung ausgebildet ist. Es wird eine Fluidströmung auf die äußere Oberfläche der geschäumten Masse gerichtet. Diese übt den Anpressdruck aus. Für die genannten Möglichkeiten, einen Anpressdruck auszuüben, gilt insbesondere, dass der Anpressdruck mindestens so groß ist wie ein Aufschäumdruck, der von dem Treibmittel innerhalb der geschäumten Masse erzeugt wird, um den Querschnitt der geschäumten Masse zu begrenzen. Alternativ kann der Anpressdruck kleiner sein als der Aufschäumdruck, um den Querschnitt der geschäumten Masse zu erhöhen, während der Anpressdruck ausgeübt wird. In einer weitere Alternative ist der Anpressdruck der genannten Möglichkeiten mindestens so groß wie ein Minimaldruck, der ausreicht, um die geschäumte Masse an eine weitere Oberfläche lückenlos anzudrücken, etwa eine Oberfläche, die als Gegenlager dient und/oder die zum Ab- und/oder Zuführen von Wärme dient.

Eine besonders bevorzugte Ausführungsform des Verfahrens sieht vor, dass das gleiche Mittel, welches den Anpressdruck ausübt, auch zur Temperierung und insbesondere zur Ab- oder Zufuhr von Wärme dient. Wie beschrieben, kann als Mittel zur Ausübung des Anpressdrucks beispielsweise eine Oberfläche, an der die geschäumte Masse vorbeigeführt wird (insbesondere in Kombination mit einer weiteren Oberfläche als Gegenlager oder als Spannelement) und/oder eine Fluidströmung verwendet werden. Es ist daher vorgesehen, dass die Oberfläche und/oder die Fluidströmung, welche den Anpressdruck auf die äußere Oberfläche der geschäumte Masse ausübt, der geschäumten Masse Wärme zuführt oder von dieser abführt bzw. im allgemeinen temperiert. Die Temperierung bzw. die Zuführung oder Abführung kann durch körperlichen Kontakt und/oder durch Wärmestrahlung geschehen. Es können weitere Elemente vorgesehen sein, die Wärme ab- oder zuführen, aber keinen Druck ausüben, und es können weitere Elemente vorgesehen sein, die Druck ausüben, aber keine Wärme ab- oder zuführen. Die Oberfläche, welche einen Anpressdruck ausübt, kann sich mit der Oberfläche, über die Wärme zu- oder abgeführt wird zumindest teilweise überlappen. So kann etwa ein Oberflächenabschnitt vorgesehen sein, der Wärme auf die geschäumte Masse abstrahlt, der jedoch aufgrund der Führung der geschäumten Masse zu dieser beabstandet ist oder zumindest keinen Druck ausübt, und der in einen Abschnitt übergeht, der sowohl zur Temperierung als auch zur Ausübung der Anpressdrucks verwendet wird.

Gemäß einem weiteren Aspekt kann vorgesehen sein, dass das Extrusionswerkzeug, durch das das Extrudat geführt wird, eine Rundschlitzdüse ist. Die Rundschlitzdüse ist mit einem umfänglich geschlossenen Schlitz ausgestattet. Das Extrusionswerkzeug, durch das das Extrudat geführt wird, kann eine Breitschlitzdüse umfassen, durch die hindurch das Extrudat geführt wird oder eine profilierte Düse. Eine Rundschlitzdüse formt die geschäumte Masse als einen ringförmigen Schaumkörper. Eine Breitschlitzdüse formt die geschäumte Masse als flachen Schaumkörper zu formen. Eine Profildüse formt zu gewünschten Abmaßen aus und definiert insbesondere die Proportionen des Querschnitts. Gemäß einer anderen Betrachtungsweise wird die Rundschlitzdüse verwendet, um einen hohlen Schaumkörper bzw. eine geschäumte Masse als eine hohle Masse zu erzeugen. Ferner wird die Breitschlitzdüse verwendet, um einen Schaumkörper mit vollem Querschnitt zu erzeugen. Bei hohlem Querschnitt kann von innerhalb der hohlen Masse (d.h. von dem freien Bereich im Querschnitt der hohlen Masse aus) Wärme der geschäumten Masse zugeführt werden oder von dieser abgeführt werden, und/oder es kann ein Anpressdruck von dort aus ausgeübt werden (oder auch ein Gegendruck mittels eines Gegenlagers innerhalb dieses freien Bereichs).

Weiterhin wird eine Vorrichtung zur Herstellung eines extrudierten Schaumprodukts beschrieben. Die Vorrichtung umfasst einen Extruder mit einem Extrusionswerkzeug. Der Extruder und das Extrusionswerkzeug entsprechen vorzugsweise den hier beschriebenen Extrudern bzw. Extrusionswerkzeugen. Die Vorrichtung weist ferner eine Temperierungsanordnung mit mindestens einer Temperierungszone auf, die sich an das Extrusionswerkzeug anschließt. Die Temperierungszone entspricht vorzugsweise der hier beschriebenen Temperierungszone. Die Temperierungsanordnung ist eingerichtet, die Temperierungszone wie hier beschrieben vorzusehen. Die Temperierungsanordnung weist zumindest ein Wärmezufuhr- und/oder Wärmeabfuhrelement auf. Das Wärmezufuhr- und/oder Wärmeabfuhrelement ist in der Temperierungszone vorgesehen oder mit dieser wärmeübertragend gekoppelt. Das zumindest ein Wärmezufuhr- und/oder Wärmeabfuhrelement ist eingerichtet, die geschäumte Masse wie hier beschrieben zu temperieren und insbesondere der geschäumten Masse Wärme zuzuführen oder abzuführen, wie es hier beschrieben ist.

Die Temperierungsanordnung ist anhand des Wärmezufuhr- und/oder Wärmeabfuhrelements eingerichtet, ein oberflächliches, randschichtiges und vollständiges Erstarren einer aus dem Extrusionswerkzeug austretenden geschäumten Masse innerhalb der Temperierungszone zu verhindern. Insbesondere die Auslegung des Wärmezufuhr- und/oder Wärmeabfuhrelements und/oder dessen Steuerung sehen vor, dass das oberflächliche, randschichtige oder vollständige Erstarren verhindert wird.

Die Wärmezufuhr- und/oder Wärmeabfuhrelemente umfassen eine oder eine Kombination mehrerer gleichartiger oder unterschiedlicher der folgenden Temperierungskomponenten. Alternativ entsprechen die Wärmezufuhr- und/oder Wärmeabfuhrelemente einem oder einer Kombination mehrerer gleichartiger oder unterschiedlicher der folgenden Temperierungskomponenten. Als eine Temperierungskomponente kann eine Kontakttemperierungsanordnung vorgesehen sein. Die Kontakttemperierungsanordnung ist mit einer Oberfläche ausgestattet, die mit einer Wärmequelle oder Wärmesenke der Vorrichtung wärmeübertragend gekoppelt ist oder die eine Wärmequelle oder Wärmesenke umfasst. Die Oberfläche erstreckt sich im Wesentlichen entlang oder parallel zu der Längsrichtung der Temperierungszone. Die Oberfläche erstreckt sich insbesondere im Wesentlichen entlang oder parallel zu der Förderrichtung.

Als eine Temperierungskomponente kann ferner eine Temperierungsdüse vorgesehen sein. Diese ist eingerichtet zur Abgabe von Temperierungsfluid in Form einer Temperierungsströmung. Die Temperierungsdüse ist auf die Temperierungszone gerichtet. Ferner kann die Temperierungsdüse mit einer Wärmequelle oder Wärmesenke verbunden sein, wobei die Temperierungsdüse auch mit einer Quelle für Temperierungsfluid und/oder mit einer Druckquelle verbunden sein kann. Insbesondere kann eine Druckluftquelle vorgesehen sein, die ein Heizelement zur Temperierung der Druckluft umfasst. Das Temperierungsfluid ist insbesondere ein Gas oder Gasgemisch wie Luft oder Stickstoff oder Kohlendioxid oder eine Flüssigkeit wie Wasser oder insbesondere Öl. Die Temperierungsdüse erstreckt sich umfänglich mit vorzugsweise gleichmäßigem Spalt oder es sind eine Vielzahl von umfänglich gleichmäßig verteilten Düsen vorgesehen. Alternativ ist die Düse zur Ausführung einer Drehbewegung eingerichtet und gibt durch die Drehbewegung eine umfänglich verteilte Strömung in Radialrichtung an. Die Düse oder Düsen können zusammen an einer Düsenanordnung vorgesehen sein und können insbesondere auf einem Ring angeordnet sein. Die Anpressdüse(n) kann bzw. können in gleicher Weise wie die Temperierungsdüse(n) ausgestaltet sein. Es können eine oder mehrere Düsenanordnungen mit Temperierungsdüsen und/oder Anpressdüsen vorgesehen sein. Es können mehrere Düsenanordnungen in Förderrichtung nacheinander folgen.

Die Temperierungskomponente kann ferner ein elektrisches Heizelement oder ein Verbrennungsheizelement umfassen. Diese sind auf die Temperierungszone gerichtet. Weiterhin kann die Temperierungskomponente ein mit einer Wärmequelle verbundenes Heizelement umfassen. Das Heizelement ist mit einer Abstrahlfläche ausgestattet, die auf die Temperierungszone gerichtet ist. Alternativ ist das Heizelement mit einer Kontaktwärmeübertragungsfläche ausgestattet, die in der Temperierungszone vorliegt und die insbesondere derart ausgerichtet ist, dass die geschäumte Masse in Kontakt mit dieser Fläche an dieser Fläche vorbeigeführt werden kann. Das Heizelement kann ferner allgemein ein Temperierungselement sein, das mit einer Wärmesenke und/oder Wärmequelle verbunden ist. Zwischen der Abstrahlfläche bzw. der Kontaktwärmeübertragungsfläche einerseits und der Wärmesenke und/oder Wärmequelle andererseits besteht eine wärmeübertragende Verbindung, die einen aktiven oder passiven Wärmemittelkreislauf umfassen kann. Zudem kann die Temperierungskomponente einen Mikrowellenstrahler beinhalten, der auf die Temperierungszone gerichtet ist. Der Mikrowellenstrahler ist eine Antenne, die mit einer Mikrowellenquelle verbunden sein kann.

Die Erfindung sieht vor, dass die Vorrichtung und insbesondere die Temperierungsanordnung eine Anpressvorrichtung aufweist. Die Anpressvorrichtung ist eingerichtet, durch Kontakt eines Festkörpers einen Anpressdruck auf die geschäumte Masse auszuüben oder in Kombination hierzu durch Richten einer Fluidströmung den Anpressdruck auf die geschäumte Masse auszuüben. Diese beiden Möglichkeiten sind im Weiteren näher dargelegt.

Eine Möglichkeit ist es, dass die Anpressvorrichtung zumindest eine Oberfläche zur Abgabe eines Anpressdrucks umfasst. Diese Oberfläche erstreckt sich vorzugsweise im Wesentlichen entlang oder parallel zu der Längsrichtung (bzw. Förderrichtung) des Extrusionswerkzeug. Das Extrusionswerkzeug ist derart geneigt auf die Oberfläche und insbesondere auch derart relativ zur Oberfläche angeordnet, dass diese den Anpressdruck auf eine äußere Oberfläche einer geschäumten Masse ausübt, die aus dem Extrusionswerkzeug austritt. Die Oberfläche zur Abgabe des Anpressdrucks und das Extrusionswerkzeug und gegebenenfalls weitere Elemente, die die geschäumte Masse führen, sind derart zueinander ausgerichtet und angeordnet, dass sich der Anpressdruck wie hier beschrieben ergibt. Die Oberfläche kann von einer Kontaktanordnung wie einem Kontaktring vorgesehen sein. Diese ist vorzugsweise temperiert und umfasst ein Heizelement oder ist von einem Wärmefluid durchflossen, das von einer Wärmequelle oder Wärmesenke dem Kontaktring zugeführt wird. Es können ein oder mehrere Kontaktanordnung vorgesehen sein, wobei insbesondere mehrere Kontaktanordnungen in Förderrichtung aufeinander folgen können.

Eine weitere Möglichkeit ist es, dass die Anpressvorrichtung zumindest eine Anpressdüse aufweist, die im Wesentlichen radial auf einen Bereich gerichtet ist, auf den auch das Extrusionswerkzeug in einer im Wesentlichen axialen Richtung gerichtet ist, wobei die Anpressdüse zur Abgabe einer Fluidströmung auf diesen Bereich ausgestaltet ist. Die Anpressdüse kann mit einer Druckquelle und/oder mit einer Quelle für Fluid verbunden sein. Das Fluid, welches die Fluidströmung realisiert, kann insbesondere ein Gas wie Luft, Stickstoff oder Kohlendioxid sein, oder kann eine Flüssigkeit wie Wasser oder Öl sein.

Das Ausüben vor Druck ermöglicht es, dass gesteuert werden kann, wie stark sich die geschäumte Masse innerhalb der Temperierungszone ausdehnt oder auf andere Weise verformt. Zudem wird durch den Anpressdruck verhindert, dass die geschäumte Masse an der äußeren Oberfläche aufplatzt. Schließlich dient der Anpressdruck dazu, die geschäumte Masse beispielsweise an ein Gegenlager und/oder an ein Wärmezufuhr- und/oder Wärmeabfuhrelement zu drücken, etwa um Lücken zwischen diesem Element und der geschäumten Masse zu verhindern.

In einer weiteren Ausführungsform ist die Fläche, welche den Anpressdruck ausübt, zumindest abschnittweise identisch mit zumindest einem Abschnitt einer Oberfläche einer Kontakttemperierungsanordnung oder einem anderem Wärmezufuhr- und/oder Wärmeabfuhrelement. Die Oberfläche der Kontakttemperierungsanordnung kann teilweise oder vollständig der Oberfläche zur Abgabe des Anpressdrucks entsprechen. Weiterhin kann vorgesehen sein, dass die Anpressdüse der Temperierungsdüse entspricht, oder zumindest das gleiche Fluid sowohl für die Übertragung von Wärme und zur Ausübung des Anpressdrucks verwendet wird. Es wird das Temperierungsfluid verwendet, um die Fluidströmung vorzusehen, die den Anpressdruck erzeugt.

Weiterhin kann das Extrusionswerkzeug der Vorrichtung eine Rundschlitzdüse mit einem umfänglich geschlossenen Schlitz oder eine Breitschlitzdüse umfassen, insbesondere eine Düse, wie sie hier anhand des Verfahrens beschrieben ist. Die Breitschlitzdüse kann in Form eines Rechtecks sein und ein Seitenverhältnis von mindestens 5, 10, 15, 20, 30, 50, 75, 100, 150, 300, 600, 900, 1200oder 1500 aufweisen. Die Rundschlitzdüse hat einen umfänglich geschlossenen Schlitz, vorzugsweise in Kreisform, in der Form eines Ovals, eines Rechtecks oder eines anderen Polygons, insbesondere mit abgerundeten Ecken. Die Breitschlitzdüse hat ein Profil mit einer geraden Linie, mit zwei vorzugsweise parallelen, geraden Linien, in der Form eines Parallelogramms, oder in Form eines (flachen) Rechtecks.

Ein weiterer Aspekt betrifft die Möglichkeit, die Wärmeübertragung und/oder das Ausüben das Anpressdrucks mit der Zeit zu verändern, etwa im Zuge einer Regelung oder zur Anpassung an sich ändernde Prozessparameter, etwa in einer Startphase. Die Wärmeübertragung bzw. der Anpressdruck kann hierbei quantitativ verändert werden, insbesondere kann ein Temperierungsprofil verändert werden. Weiterhin kann der Ort, an dem der Anpressdruck ausgeübt wird, verändert werden, etwa durch Ändern der Führung, durch Verschieben, Drehen oder Schwenken von Elementen, die den Anpressdruck ausüben oder erzeugen, von Elementen, die das geschäumte Material führen, oder die das Gegenlager bilden. In Kombination oder alternativ können die Stellen, an denen die Wärme der Masse zugeführt oder von dieser abgeführt wird, geändert werden. Beispielsweise können die Wärmezufuhr- und/oder Wärmeabfuhrelemente verschiebbar, schwenkbar oder drehbar sein, vorzugsweise auch lösbar arretierbar. Insbesondere die Oberflächen, die den Anpressdruck ausüben und/oder die Oberfläche, über die Wärme von/oder zu der geschäumten Masse übertragen wird, sind verschiebbar, schwenkbar oder drehbar, vorzugsweise auch lösbar arretierbar. Die betreffenden Elemente sind gegenüber der geschäumten Masse bzw. der Förderrichtung radial, axial, umfänglich oder in einer anderen Richtung verschiebbar, schwenkbar oder drehbar.

Insbesondere die Oberflächen, welche den Anpressdruck ausüben, können bei Extruderdüsen mit hohlem Profil außerhalb des gesamten geschäumten Körpers vorgesehen sein und innerhalb des geschäumten Körpers in Bereichen vorgesehen sein, die nicht mit geschäumter Masse gefüllt sind. Diese Bereiche entsprechen hohlen Bereichen des Profils. Vorzugsweise sind sowohl außerhalb als auch innerhalb des geschäumten Körpers Oberflächen vorgesehenen, die den geschäumten Körper führen und die vorzugsweise auch den Anpressdruck ausüben bzw. ein Gegenlager hierzu bilden. Die Oberflächen bzw. die Körper, welche die Oberflächen ausbilden, sind vorzugsweise schwenkbar, verschiebbar oder drehbar wie oben beschrieben. Anstatt oder in Kombination mit Oberflächen, die den Anpressdruck ausüben, können auch Oberflächen vorgesehen sein, die Wärme dem geschäumten Körper zuführen oder von diesem abführen. Auch diese zur Temperierung dienenden Oberflächen sind vorzugsweise schwenkbar, verschiebbar oder drehbar. Die zur Temperierung dienenden Oberflächen können von anderen Körpern vorgesehen sein als die Anpressdruck ausübenden Oberflächen. Vorzugsweise werden die zur Temperierung dienenden Oberflächen von den gleichen Körpern, Elementen oder Komponenten vorgesehen, wie die Anpressdruck ausübenden Oberflächen. Insbesondere können die zur Temperierung dienenden Oberflächen identisch sein zu den Oberflächen, die den Anpressdruck ausüben. Innerhalb des geschäumten Körpers kann ein Dorn vorgesehen sein, entlang dem der geschäumte Körper geführt wird. Der Dorn ist insbesondere vorgesehen, um die geschäumten Masse zu temperieren und insbesondere Wärme zuzuführen. Der Dorn weitet die geschäumte Masse auf. Der Dorn erzeugt ferner den Anpressdruck oder bildet vorzugsweise das Gegenlager hierfür. Der Dorn ist innerhalb der Temperierungszone vorgesehen. Dem Dorn schließt sich vorzugsweise ein zylindrischer Körper an, welcher durch Kühlung die schäumbare Masse in ihren umfänglichen Endabmassen fixiert. Der zylindrische Körper kühlt die geschäumte Masse unter die Erstarrungstemperatur. Durch die Kühlung des zylindrischen Körpers erstarrt die geschäumte Masse zu einem Schaumkörper.

Im Folgenden sind weitere Merkmale und Eigenschaften dargelegt, die zur Ausführung des Verfahrens und/oder zur Realisierung der Vorrichtung verwendet werden können. Das Extrudat bzw. die Masse, welche in den Extruder eingegeben wird, umfasst ein Polymerisat, insbesondere Polystyrol. Das Extrudat kann im Wesentlichen aus dem Polymerisat, insbesondere Polystyrol, bestehen (abgesehen von ggf. weiteren Zusätzen oder Treibmitteln wie hier beschrieben ist). Das Extrudat umfasst beispielsweise einen synthetischen, naturbasierten oder nachwachsenden Kunststoff, insbesondere Polystyrol, Polypropylen oder Polyethylentherephthalat. Alternativ besteht das Extrudat im Wesentlichen aus dem Kunststoff (vorzugsweise abgesehen von ggf. weiteren Zusätzen oder Treibmitteln wie hier beschrieben ist), insbesondere aus Polystyrol, Polypropylen oder Polyethylentherephthalat. Als weitere Bestandteile des Extrudats eignen sich insbesondere das in der Beschreibungseinleitung beschriebene Gemisch bzw. die dort beschriebenen Stoffe. Ebenso werden vorzugsweise die in der Beschreibungseinleitung erwähnten Schritte zur Darstellung und Vorverarbeitung des Extrudats ausgeführt.

Gemäß einem weiteren Aspekt umfasst das Extrudat ein Polyolefin umfasst, insbesondere Polypropylen oder Polyethylen, oder das Extrudat besteht im Wesentlichen aus dem Polyolefin, insbesondere Polypropylen oder Polytheylen (vorzugsweise abgesehen von ggf. weiteren Zusätzen oder Treibmitteln wie hier beschrieben ist). Gemäß einem weiteren Aspekt umfasst das Extrudat ein Polykondensat, insbesondere Polyethylentherephthalat, Celluloseacetat, Polymilchsäure, Polyhydroxyacetat oder Polybutylensuccinat, oder das Extrudat besteht im Wesentlichen aus Polyethylentherephthalat, Celluloceacetat, Polymilchsäure, Polyhydroxyacetat oder Polybutylensuccinat (vorzugsweise abgesehen von ggf. weiteren Zusätzen oder Treibmitteln wie hier beschrieben ist). Das Extrudat kann ein oder mehrere thermoplastische Polymere aus der Gruppe natur- oder erdölbasierter Polymerisate, typischerweise Polystyrol als erdölbasiertes Polymerisat, oder Polykondensate umfassen.

Dem Extrudat kann vor dem Einfüllen in den Extruder oder während dem Fördern innerhalb des Extruders mindestens ein Treibmittel als Feststoff, als Flüssigkeit oder als Treibgas zugeführt werden. Das Treibmittel ist bevorzugt ein Wärmeisolationsgas mit einem geringerem Wärmeleitwert als Luft, z.B. ein Wärmeisolationsgas für Klimaanlagen 2., 3. oder 4. Generation, z.B. 142b (Wärmeleitwert 12,9 mW/m²K) oder R22 (Wärmeleitwert 10,5 mW/m²K) oder 134a (Wärmeleitwert 13,7 mW/m²K) oder 152a (Wärmeleitwert 14,3 mW/m²K) oder HFO-1234ze (Wärmeleitwert 11,8 mW/m²K) oder ein Alkohol, z.B. Ethanol, Propanol oder ein Hydrocarbongas, z.B. Butan oder Propan. Als Treibmittel bzw. Wärmeisolationsgas kann Kohlendioxid, Propan, Butan, Pentan, Hexan, Äthanol, Propanol, Ether, Aceton, Stickstoff, Wasser oder eine Mischung mindestens zweier dieser Stoffe eingesetzt werden.

Neben dem Treibmittel können ein oder mehrere Additive dem Extrudat beigefügt sein. Die ein oder mehrere Additive umfassen insbesondere ein Schaumnukleierungsmittel, Farbe, Weichmacher, Flammschutzmittel, UV-Stabilisator, Gleitmittel, Zellstabilisator, Füllstoff oder ein Antistatikum. Hierbei ist das zum Schäumen notwendige Schaumnukleierungsmittel etwa ein passives aus Talkum bestehendes oder Talkum enthaltendes Mittel und/oder aktives Schaumnukleierungsmittel, insbesondere ein chemisches Treibmittel, das auf exothermer Zersetzungsreaktion beruht, wie Zitronensäure oder Bikarbonat. Vorzugsweise nach dem Aufschmelzen und Vermischen des Materialgemisches wird mindestens ein Treibmittel in die aufgeschmolzene und vermischte Schmelze eindosiert, welches beim Übergang vom Flüssig- in den Gaszustand der Schmelze beim Aufschäumen Wärme entzieht. Nach dem Untermischen des Treibmittels / Treibgases, wird die resultierende Masse während des Extrudierens im selben oder einem oder mehreren sich anschließenden Extrudern gekühlt und anschließend mittels der Extruderdüse, etwa einer Runddüse, zu einem Schaumkörper verarbeitet, der bei der Runddüse ringförmig ist. Dabei wird die Art/Menge des Treibmittels und ggf. die Art/Menge des Schaumnukleierungsmittels so ausgewählt, dass die Schaumbildung möglichst nahe am Extrusionswerkzeugaustritt stattfindet.

Nach dem Austritt aus der Runddüse wird der entstehende Schaumkörper mittels Aufblasen durch Innenluft aufgeweitet, insbesondere innerhalb, am Ende oder gegebenenfalls auch nach dem Austritt aus der Temperierungszone und insbesondere in nur teilweise oder in vollständig erstarrtem Zustand. Ferner wird der Schaumkörper nach dem Austritt aus der Runddüse und vorzugsweise am Ende der Temperierungszone oder nach dem Verlassen der Temperierungszone mittels eines Abzuges über einen Kühldorn gezogen, aufgeschnitten und dann auf Wicklern zu Schaumbahnrollen aufgewickelt, vorzugsweise in vollständig erstarrtem Zustand oder auch in nur teilweise erstarrtem Zustand. Optional kann eine Nachexpansion folgen. Die erhaltenen, aus der geschäumten Masse und dem Schaumprodukt resultierenden Schaumbahnen können zur Erzielung größerer Gesamtdicken als Mehrschichtverbund zusammengeführt werden, um etwa eine Dämmplatte zu bilden.

In einer Ausführungsform wird die geschäumte Masse, die sich durch die Führung des Extrudats durch die Runddüse ergibt, zu einem ringförmigen Schaumkörper mit einer Schichtdicke von >= 0.1 mm mittels einer Strömung im Inneren des Schaumkörpers aufgeblasen. Die Schichtdicke des Schaumkörpers wird durch die Schichtdicke, durch die Temperierung, durch den Anpressdruck, durch den Druck des Treibmittels sowie ggf. durch die Aufweitung durch das Aufblasen oder durch den Dorn bestimmt. Die Schichtdicke wird somit durch die vorgenannten Parameter gesteuert und beträgt vorzugsweise mindestens 0.1, 0.2, 0.3, 0.4, 0.5, 0.6, 0.7, 0.8, 0.9, 1.0, oder 1,2 mm, mindestens 1,5 mm, mindestens 1,8 mm, mindestens 2 mm oder mindestens 2,5 mm.

Als Resultat des Verfahrens kann ein Mehrschichtverbund erhalten werden, wenn das Schaumprodukt in mehreren Lagen verbunden wird. Ferner entspricht sie den genormten Dickentoleranzstandards von Dämmstoffen (DIN 18164).Je nach Einsatzgebiet müssen des weiteren die entsprechenden Normen eingehalten. Für den Einsatz im Dachbereich sind dies DIN 52612 oder ASTM C 518 (Wärmeleitfähigkeit), DIN 53421 oder ASTM D 1621 (Druckfestigkeit), ASTM D 2842 (Wasseraufnahme) oder / und ASTM C 355 (Wasserdampfpermeation). Als Einsatz im Wandbereich sind dies DIN 52612 oder ASTM C 51 8. (Wärmeleitfähigkeit), DIN 53421 oder ASTM D 1621 (Druckfestigkeit), ASTM D 2842 (Wasseraufnahme) oder / und ASTM C 355 (Wasserdampfbarriere). Für den Einsatz im Bodenbereich sind dies DIN 52612 oder ASTM C 518 (Wärmeleitfähigkeit), DIN 52612 oder ASTM D 1621 (Druckfestigkeit) oder / und ASTM D 2842 (Wasseraufnahme). Die als Mehrschichtverbund ausgeführte erfindungsgemäße Schaumware oder resultierende Schaumware weist bei Verwendung einer Wärmeisolationsgases einen Wärmeleitwert von <=28 mW/m²K, insbesondere von <= 24 mW/m²K auf.

Im Anwendungsfall der Wärmeisolierung reduziert der Einsatz der sogenannten "Klimanlagengase" (d.h. der Gase, die auch in Klimaanlagen verwendet werden) als Treibmittel / Treibgas zur Herstellung der Schaumbahnen nun jedoch den Wärmeleitwert auf tlw. deutlich unter 30 mW/m²K - und damit auf bessere Werte als die am Markt etablierte Dämmungen (schwarzer EPS Partikelblockschaum >= 32 mW/m²K, weißer EPS Partikelblockschaum >= 40 mW/m²K, Mineralwolle >= 36 mW/m²K). Somit ergibt neben der erfindungsgemäß erhaltenen, reduzierten Dichte auch eine deutlich erhöhte Wärmeisolationsfähigkeit gegenüber Dämmwaren nach dem Stand der Technik. Setzt man die 4. Generation der "Klimaanlagengase" (wie z.B. Honeywell HFO-1234ze) ein, so kann der Wärmeleitwert für erfindungsgemäß erzeugte Schaumwaren sogar unter 28 mW/m²K sinken.

Damit wird mit diesem Verfahren und dieser Vorrichtung eine sehr leichte und damit kostengünstige Dämmware verfügbar, welche mit sehr guten Wärmeleitwerten deutlich geringeren Dicken zum Einstellen eines bestimmten Dämmwertes benötigt als die heutigen am Markt verfügbaren Dämmwaren.

Die hier beschriebene Vorgehensweise erlaubt eine gezielte Temperaturführung des Extrudates und insbesondere mindestens eines Kontaktelements, das zur Wärmeübertragung und alternativ oder in Kombination hierzu zur Ausübung des Anpressdrucks dient. Es ist möglich, dass der dem Aufschäumdruck entgegenstehende Anpressdruck einstellbar ist, und dass in dem Temperierungsvorgang und insbesondere an dessen Start, die Zellgröße und die Zellstruktur der einzelnen Schaumzellen eingestellt werden können.

Mit der hier beschriebenen Vorgehensweise ist es möglich, dass die Abkühlung erst dann einsetzt, wenn sich in den einzelnen Zellen ein Druckgleichgewicht eingestellt hat, wodurch sich die maximal mögliche Gleichförmigkeit aller Zellen ergibt.

Durch die ermöglichte gezielte Optimierung der Zellhomogenität der erfindungsgemäß hergestellten Schaumprodukte wird bei gleichen mechanischen und oder optischen Produkteigenschaften ein geringeres Raumgewicht erzielt. Der hierin verwendete Begriff Dichte entspricht vorzugsweise dem Raumgewicht der geschäumten Masse bzw. des (erstarrten) Schaumkörpers bzw. des (geschnittenen) Schaumprodukts.

Die Erfindung umfasst ferner ein Schaumprodukt hergestellt mittels der hier beschriebenen Vorrichtung oder mittels des hier beschriebenen Verfahrens.

Im Folgenden wird ein Verfahren und eine Vorrichtung offenbart:
Ein Verfahren zur Herstellung eines extrudierten Schaumprodukts, wobei ein mit zumindest einem Treibmittel versetztes Extrudat durch ein Extrusionswerkzeug geführt wird, das Extrudat nach Austritt aus dem Extrusionswerkzeug durch das Treibmittel zu einer geschäumten Masse aufgeschäumt wird, dadurch gekennzeichnet, dass ein Erstarren, insbesondere ein oberflächliches, randschichtiges oder vollständiges Erstarren, der aus dem Extrusionswerkzeug austretenden geschäumten Masse innerhalb einer Temperierungszone, die sich an das Extrusionswerkzeug anschließt, verhindert wird durch Temperieren der geschäumten Masse innerhalb der Temperierungszone.

Eine Vorrichtung zur Herstellung eines extrudierten Schaumprodukts, wobei die Vorrichtung einen Extruder mit einem Extrusionswerkzeug umfasst, dadurch gekennzeichnet, dass
die Vorrichtung ferner eine Temperierungsanordnung mit einer Temperierungszone aufweist, die sich an das Extrusionswerkzeug anschließt, wobei die Temperierungsanordnung zumindest ein Wärmezufuhr- und/oder Wärmeabfuhrelement aufweist, das in der Temperierungszone vorgesehen oder mit dieser wärmeübertragend gekoppelt sind, wobei
die Temperierungsanordnung anhand des Wärmezufuhr- und/oder
Wärmeabfuhrelements eingerichtet ist, ein vollständiges Erstarren einer aus dem Extrusionswerkzeug austretenden geschäumten Masse innerhalb der Temperierungszone zu verhindern.

### Kurzbeschreibung der Zeichnungen

Die Erfindung wird nachfolgend anhand eines Ausführungsbeispieles in Verbindung mit der Zeichnung im Einzelnen erläutert.

Es zeigt:
- Figur 1: eine Schemadarstellung zur näheren Erläuterung der hier beschriebenen Vorgehensweise.
- Figur 2: eine Ausführungsform einer Temperierungszone, wie sie verfahrensgemäß oder gemäß der hier beschriebenen Vorrichtung vorgesehen wird.

### Detaillierte Figurenbeschreibung

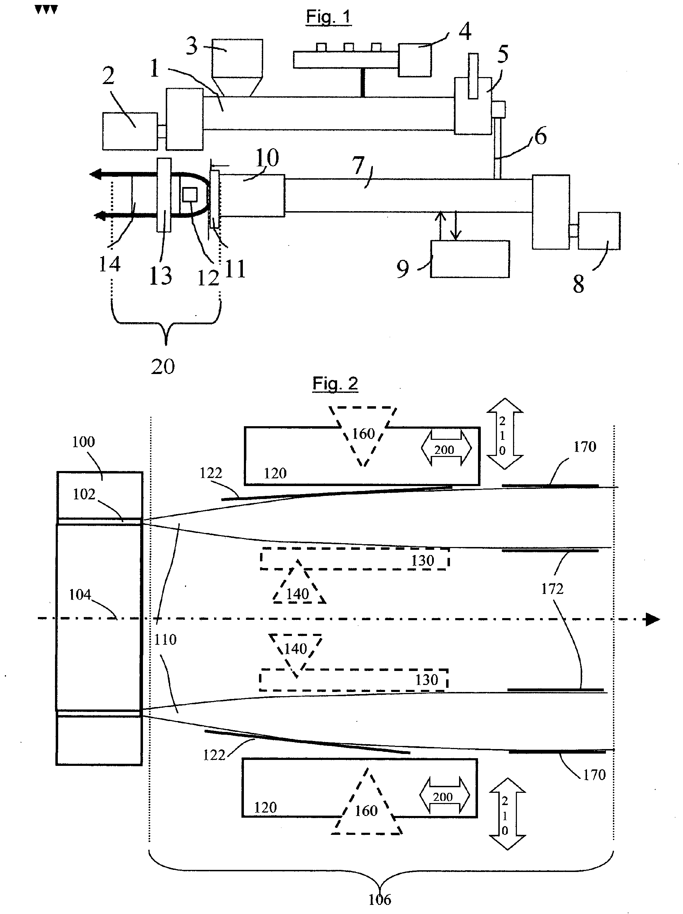

Die Figur 1 zeigt eine Vorrichtung zur Herstellung von Schaumkörpern, insbesondere eine Schaumextrusionsbahnanlage, mit zwei Extrudern. Die in Figur 1 schematisch dargestellte Vorrichtung besitzt einen ersten Extruder 1 mit einem entsprechenden Antrieb 2 und einen zweiten Extruder 7 mit einem entsprechenden Antrieb 8. Über einen Eingabetrichter 3 wird das Ausgangsmaterial, d.h. die Eduktkomponenten des Extrudats, im Gemisch mit einem Schaumnukleierungsmittel und optional einem oder mehreren Additiven in den Extruder 1 eingeführt. Durch Rotation der Extruderschnecke und Aufheizen wird das eingeführte Materialgemisch verdichtet und aufgeschmolzen. Über eine oder mehrere geeignete Beschickungseinrichtungen 4 wird ein Treibmittel / Treibgas oder Treibmittelgemisch / Treibgasgemisch, beispielsweise ein Gemisch aus Kohlendioxid und Ethanol, in die Schmelze eingeführt. Die aufgeschmolzene Masse gelangt durch einen geeigneten, optionalen Filter 5, welcher optional sich auch an den zweiten Extruder 7 anschließen kann, und eine Überführungsleitung, Überführungseinrichtung oder einen Überführungsextruder 6 in den zweiten Extruder 7. Der erste Extruder 1 sieht eine Vorverarbeitung des Extrudats vor, und der nachfolgende zweite Extruder 7 führt das Extrudat durch ein Austrittswerkzeug 10, um eine Schaumbahn und nachfolgend einen Schaumkörper zu erzeugen. In einer nicht dargestellten, weiteren Ausführungsform ist der erste Extruder optional, wobei der zweite Extruder in diesem Fall mit einem Trichter wie der Eingabetrichter 3 und mit einer Einrichtung wie die Beschickungseinrichtungen 4 ausgestaltet ist, wenn der erste Extruder nicht vorgesehen ist. Auch der zweite Extruder kann einen Filter wie den Filter 5 umfassen.

Das aus dem ersten Extruder abgegebene Material, d.h. das Extrudat, wird im Extruder 7 weitergefördert und dabei gekühlt. Während der Kühlphase im zweiten Extruder 7 wird die aufgeschmolzene Masse durch Kontakt mit dem Extruder mit Hilfe von Kühlwasser oder einem anderen Kühlmedium gekühlt, das über einen Kühlwasserbehälter oder Temperierer 9 dem Extruder zur Kühlung des Extruderzylinders zu- und abgeführt wird. Eine entsprechende Kühlung der Masse ist von Bedeutung, um beim nach Verlassen des Extruders erfolgenden Aufschäumvorgang moderate Verhältnisse zu erzielen und ein zu abruptes Entweichen des Treibmittels / Treibgases zu verhindern. Es wird über ein geeignetes Extruderwerkzeug 10 mit einer Runddüse das Extrudat in Form eines Schlauches mit ringförmigen bzw. kreisförmigen Querschnitt abgegeben, wobei das Extrudat nach dem Austritt aus der Runddüse infolge der entstehenden Druckentlastung aufgeschäumt wird, indem das Treibmittel /Treibgas vom flüssigen in den volumenmässig größeren Gaszustand übergeht. An das Extruderwerkzeug 10 schließt sich in Förderrichtung des Extruders die Temperierungszone 20 an. In dieser ist eine Temperierungsdüse 12 vorgesehen, die insbesondere temperierte und insbesondere erwärmte Luft gleichmäßig umfänglich verteilt nach außen abgibt, insbesondere radial. Die sich ergebende Temperierungsströmung ist auf die geschäumte Masse gerichtet, von der nur der Umfang in Form von gebogenen, nach links weisenden Pfeilen dargestellt ist. Es ist ferner ein Luftring oder Kontaktring 11 vorgesehen, der zumindest eine Oberfläche vorsieht, die einen Anpressdruck von außen auf die geschäumte Masse ausübt. Der Luftring oder Kontaktring 11 kann stattdessen oder neben dem Anpressdruck Wärme der geschäumten Masse zuführen oder von dieser abführen. Anstatt dem Luftring oder Kontaktring 11 kann allgemein eine Kontaktanordnung oder eine Düsenanordnung vorgesehen sein. Mit dieser wird der Anpressdruck ausgeübt, die geschäumte Masse temperiert, oder beides.

Die hohlzylindrische geschäumte Masse wird nun mittels Innenluft bzw. mittels einer Innentemperierungsströmung 12 (Luft) aufgeblasen und über einen runden, temperierten Kalibrierdorn 14, über einen Kalibrierring oder über Kalibrierringe gezogen, nachdem die Außenseite des Schaumkörpers etwa durch einen Luftring oder Kontaktring 11 temperiert wurde oder geführt wurde, oder mit einem Anpressdruck beaufschlagt wurde. Der Kontaktring sieht eine temperierte Innenfläche bzw. Kontaktfläche vor. Über eine weiteren optionale Düsenanordnung oder Kontaktanordnung, insbesondere ein weiterer Luftring 13, erfolgt optional eine weitere Temperierung der geschäumten Masse. Mit den Komponenten 11, 12 und/oder 13 lässt sich ein erwünschter Temperaturverlauf einstellen, sofern mit diesen Wärme ab- oder zugeführt wird. Die Komponenten 11 und 13 wirken von außen auf die geschäumte Masse und die Komponente 12 wirkt von innen auf die geschäumte Masse. Es können keine, eine oder mehrere nacheinander angeordnete Kontakt- oder Düsenanordnungen vorgesehen sein, die von außen wirken. Es können keine, eine oder mehrere nacheinander angeordnete Kontakt- oder Düsenanordnungen vorgesehen sein, die von innen wirken. Vorzugsweise ist mindestens eine der Kontakt- oder Düsenanordnungen eine Wärmeabfuhr- oder Wärmezufuhrelement. Ferner kann keine, eine oder es können mehrere der Kontakt- oder Düsenanordnungen eine Anpressvorrichtung sein. Die Anpressvorrichtung und das Wärmeabfuhr- oder Wärmezufuhrelement kann durch eine gemeinsame Komponente vorgesehen sein. Von innen und von außen wirkende Komponenten können nacheinander angeordnet sein oder können überlappend oder an dem gleichen Längsabschnitt vorgesehen sein.

Die Figur 2 zeigt als schematische Längsschnittdarstellung eine Ausführungsform einer Temperierungszone, die sich an ein Extruderwerkzeug 100 anschließt. Das Extruderwerkzeug 100 hat einen kreisförmigen Spalt 102, durch den das Extrudat geführt wird, wodurch an dem Spalt 102 die geschäumte Masse 110 entsteht. Das Extrudat und auch die geschäumte Masse 110 werden von dem Extruderwerkzeug 100 weg gefördert, etwa durch eine Extruderschnecke eines Extruders (nicht dargestellt), an dessen Ausgabeende das Extruderwerkzeug 100 vorgesehen ist. Es ist ersichtlich, dass sich die hohlzylinderförmige geschäumte Masse 110 mit zunehmendem Abstand von dem Extruderwerkzeug 100 ausdehnt. Die strichpunktierte Linie gibt die Mittelachse 104 des Extruderwerkzeugs wieder, und gibt ebenso anhand des Pfeilendes die Förderrichtung wieder. An das Extruderwerkzeug 100 schließt sich über einen optionalen Spalt, dessen Breite gegenüber der Fördergeschwindigkeit so gering ist, dass die geschäumte Masse zumindest nicht oberflächlich, randschichtig oder vollständig erstarrt, die Temperierungszone 106 an. In der Figur 1 sind die Längsgrenzen der Temperierungszone 106 als Punktlinie dargestellt. Es sind Komponenten einer Temperierungsanordnung vorgesehen, in der die Temperierungszone 106 ausgebildet ist. Die Temperierungsanordnung umfasst ein Wärmezufuhr- bzw. Wärmeabfuhrelement 120, das Wärme über Wärmestrahlung an die geschäumte Masse 110 abgibt oder aufnimmt. Das Element 120 kann ein elektrisches Heizelement umfassen oder weist einen Hohlraum auf, durch den Wärmemedium fließt. Das Element 120 weist eine zur geschäumten Masse 110 gerichtete Oberfläche auf, die durch Wärmestrahlung wärmeübertragend mit der geschäumten Masse verbunden ist.

Als Alternative oder in Kombination zu dem Element 120 ist eine Temperierungsdüse 160 vorgesehen, die auf die geschäumte Masse 110 ausgerichtet ist. Diese bläst beispielsweise temperierte und insbesondere erwärmte Luft auf die geschäumte Masse 110. Die Temperierungsdüse 160 erstreckt sich vorzugsweise umfänglich um die geschäumte Masse herum. Die Temperierungsdüse 160 wird insbesondere von einem Düsenring vorgesehen. Anstatt einer Düse können auch eine Vielzahl umfänglich aneinandergereichter Düsen verwendet werden.

Ferner ist eine Anpressvorrichtung 122 vorgesehen, die eine Oberfläche zum Führen und zum Ausüben eines Anpressdrucks aufweist. Die Oberfläche ist derart zu dem Extrusionswerkzeug ausgerichtet und angeordnet, dass die aus dem Extrusionswerkzeug austretende geschäumte Masse 110 an der Anpressvorrichtung 122 vorbeigeführt wird. Die Oberfläche der Anpressvorrichtung 122, die zur Kontaktierung und Führung dient, öffnet sich in der Förderrichtung 104. Die Anpressvorrichtung kann insbesondere als Kontaktring vorgesehen sein. Die Oberfläche der Anpressvorrichtung 122 kann sich insbesondere von der geschäumten Masse weg wölben, vorzugsweise in Förderrichtung und in der entgegengesetzten Richtung. Dies trifft auch für weitere Oberflächen zu, insbesondere für Oberflächen, die zur Wärmeübertragung dienen. Die Anpressvorrichtung kann als Kontaktring vorgesehen sein. Die Anpressvorrichtung kann durch ein zumindest teilweise umfänglich verlaufendes Blech vorgesehen, das sich in Förderrichtung öffnet. Anstatt des Blechs kann auch eine Kunststoffplatte vorgesehen sein, die wie das Blech ausgeformt ist. Das Blech bzw. die Kunststoffplatte können antihaftbeschichtet sein. Das Blech bzw. die Kunststoffplatte geben von dem Element 120 empfangene Wärme an die geschäumte Masse 110 weiter oder geben von der geschäumten Masse 110 empfangene Wärme an das Blech bzw. an die Kunststoffplatte weiter. Die Anpressvorrichtung ist insbesondere hinsichtlich der Wärmeübertragung transparent. Wenn das Element 120 ein Mikrowellenstrahler ist, dann ist die Anpressvorrichtung vorzugsweise für Mikrowellen transparent.

Die Anpressvorrichtung 122 kann auf der gleichen Höhe (in Längsrichtung) wie das Wärmeabfuhrelement 120 vorgesehen sein. Die Anpressvorrichtung 122 und das Wärmeabfuhrelement 120 können sich über Abschnitte in Längsrichtung erstrecken, die sich teilweise oder vollständig überlappen, oder die sich nicht überlappen und insbesondere nacheinander in Längsrichtung liegen, beispielsweise über einen Lückenabschnitt in Längsrichtung beabstandet oder auch unmittelbar aneinandergrenzend. Die kann auch für andere Komponenten gelten, insbesondere für mindestens zwei der Komponenten 120, 122, 130, 140, 160, 170 und 172 der Figur 2. Die vorangehend genannten Komponenten 120, 122 und 160 sind umfänglich um die geschäumten Masse herum angeordnet. Im Inneren der hohlen geschäumten Masse können ebenso Komponenten der Temperierungsanordnung vorgesehen sein. Diese sind, wie die außerhalb angeordneten Komponenten, zu der geschäumten Masse hin ausgerichtet. Im Inneren der hohlen geschäumten Masse ist ein weiteres Wärmezufuhr- bzw. Wärmeabfuhrelement 130 vorgesehen, das Wärme über Wärmestrahlung an die geschäumte Masse 110 abgibt oder von dieser aufnimmt. Das Element 130 kann ein elektrisches Heizelement umfassen oder weist einen Hohlraum auf, durch den Wärmemedium fließt. Das Element 130 weist eine zur geschäumten Masse 110 gerichtete Oberfläche auf, die durch Wärmestrahlung wärmeübertragend mit der geschäumten Masse verbunden ist. Es ist zu erkennen, dass das Element 130 wie auch das Element 120 einen Abschnitt aufweist, an dem das betreffende Element Kontakt zu der geschäumten Masse 110 aufweist. In diesem Abschnitt entspricht die Oberfläche der Kontakttemperierungsanordnung der Oberfläche einer Anpressvorrichtung.

Als weiteres optionales Element ist eine weitere Temperierungsdüse 140 vorgesehen, die nach außen zu der geschäumten Masse gerichtet ist. Diese bläst beispielsweise temperierte und insbesondere erwärmte Luft auf die geschäumte Masse 110. Die Temperierungsdüse 140 erstreckt sich vorzugsweise vollumfänglich um die Mittelachse 104 herum und ist innerhalb der geschäumten Masse 110 angeordnet. Die Temperierungsdüse 140 wird insbesondere von einem Düsenring vorgesehen. Anstatt einer Düse können auch eine Vielzahl umfänglich aneinandergereichter Düsen verwendet werden. Anstatt der Temperierungsdüse 140 und/oder 160 kann eine Anpressdüse vorgesehen sein. Diese ist wie die Temperierungsdüse ausgebildet, wobei das von der Düse abgegebene Fluid keine bestimmten Temperatureigenschaften aufweisen muss. Jedoch kann eine Mindestströmungsgeschwindigkeit am Düsenauslass vorgesehen sein (oder eine Mindestvolumendurchsatz), um den Anpressdruck gezielt vorzusehen. Die Funktionen der Temperierungsdüse und der Anpressdüse können vereint sein. In diesem Fall wird diese Düse derart betrieben, dass sich der Anpressdruck einstellt (bspw. anhand der Mindestströmungsgeschwindigkeit oder anhand des Mindestvolumendurchsatzes), und dass sich die Temperierung ergibt (etwa durch Heizen oder Kühlen des von der Düse abgegebenen Fluides).

Es können weitere Elemente 170, 172 vorgesehen sein, die stromabwärts der Elemente 120 - 160 liegen. Die Elemente 170, 172 bilden innerhalb und außerhalb der geschäumten Masse angeordnete Oberflächen, die jeweils in Kontakt mit der geschäumten Masse 110 sind. Diese Elemente 170 bilden Oberflächen, die die geschäumte Masse 110 führen. Abhängig von dem Grad der Erstarrung können die Oberflächen der Elemente 170, 172 auch einen Anpressdruck ausüben, damit Zellen im Inneren der geschäumten Masse noch plastisch verformbar bleiben und sich Zellgrößen homogenisieren können. Etwa wenn die äußere Oberfläche der geschäumten Masse 110 noch nicht derart erstarrt ist, dass der Druck des Treibmittels an dieser Stelle die äußere Oberfläche verformen kann, dann üben die Oberflächen der Elemente 170, 172 einen Anpressdruck aus. Hierbei kann das Element 170 oder das Element 172 als Gegenlager dienen. Ferner können die Elemente 170, 172 auch eine Kontakttemperierungsanordnung sein, beispielsweise eine von temperiertem Wärmemedium durchflossene Anordnung. Wenn die Elemente 170, 172 nicht nur Führen, sondern auch einen Anpressdruck ausüben, kombinieren die Elemente 172, 170 eine Kontakttemperierungsanordnung und eine Anpressvorrichtung mit eine Oberfläche zur Abgabe eines Anpressdrucks. Hierbei entspricht die Oberfläche der Kontakttemperierungsanordnung teilweise oder vollständig der Oberfläche des Anpresselements zur Abgabe des Anpressdrucks. Nach dem Austritt aus den Elementen 170, 172 ist die geschäumte Masse 110 vorzugsweise vollständig erstarrt. Falls nicht, kann eine weitere, darauf folgende Temperierungsanordnung zur Abfuhr von Wärme vorgesehen sein, beispielsweise eine Kühlanordnung in Form eines Kontaktrings oder Kühlrings.

Gemäß einer zur Erläuterung der Erfindung vorteilhaften spezifischen Ausführungsform, die in diesem Absatz dargestellt ist, sind die Elemente 170, 172 Oberflächen einer Anpressvorrichtung, die den Anpressdruck auf die geschäumte Masse ausüben. Das Element 120 ist eine Oberfläche einer Temperierungsanordnung, die einen Wärmeübertrag durch Wärmestrahlung vorsieht. Die optionale Düse 140 gibt eine Fluidströmung zur Ausübung des Anpressdrucks ab, und die optionale Düse 160 gibt eine Temperierungsströmung ab. Falls die optionale Düse 160 vorgesehen ist, kann das Element 122 weggelassen werden. Falls das Element 122 vorgesehen ist, dann ist dies eine Kontakttemperierungsvorrichtung. Diese kann beispielsweise radial beweglich gelagert sein, so dass diese nur führt, jedoch keinen Anpressdruck ausübt. Alternativ kann das Element 122 eine kombinierte Kontakttemperierungsvorrichtung und Anpressvorrichtung sein, die eine Oberfläche als Wärmeabfuhr- oder Wärmezufuhrelement vorsieht, die zumindest teilweise auch eine Oberfläche zur Ausübung des Anpressdrucks ist. Die optionale Düse 160 und/oder die optionale Düse 140 kann jedoch auch eine Strömung als kombinierte Fluidströmung und Temperierungsströmung abgeben und daher zum Temperieren und zum Ausüben des Anpressdrucks dienen. Insbesondere wird die Temperierungsanordnung von einer oder von mehreren der oben genannten Komponenten 120, 122, 130, 140, 170 oder 172 gebildet. Jede der oben genannten Komponenten 120, 122, 130, 140, 170 oder 172 kann einfach oder mehrfach vorgesehen werden. Im letztgenannten Fall sind mehrere gleichartige Komponenten entlang der Förderrichtung 110 aufgereiht und/oder innerhalb und/oder außerhalb der geschäumten Masse vorgesehen. Die Komponenten 120, 122, 130, 140, 170 oder 172 sind lediglich schematisch dargestellt, wobei die zur Darstellung verwendeten Zeichenelemente insbesondere nicht die Form der realisierten Komponenten darstellen soll. Die Zeichenelemente geben die Anordnung der Komponenten zum Extruderwerkzeug 100, zu der geschäumten Masse 110, zu der Förderrichtung 104 (= axiale Richtung) oder die Anordnung der Komponenten untereinander an, insbesondere in radialer oder in axialer Richtung. Mit den Doppelpfeilen 200 und 210 sind exemplarisch die möglichen Verschiebungsrichtungen der Komponente 120 bzw. der Komponenten 160 dargestellt. Es können alle, mehrere, oder nur eine Komponente der Komponenten 120, 122, 130, 140, 170 oder 172 gemäß der Doppelpfeile 200 und/oder 210 verschiebbar sein. Doppelpfeil 210 entspricht einer Verschiebung in radialer Richtung. Doppelpfeil 210 entspricht einer Verschiebung in axialer Richtung. Die zur Darstellung der geschäumten Masse verwendeten Linien geben ferner die äußere Oberfläche der geschäumten Masse in Querschnittsdarstellung wieder.

## Patentansprüche

1. Verfahren zur Herstellung eines extrudierten Schaumprodukts,
wobei ein mit zumindest einem Treibmittel versetztes Extrudat durch ein Extrusionswerkzeug (100) geführt wird, das Extrudat nach Austritt aus dem Extrusionswerkzeug durch das Treibmittel zu einer geschäumten Masse (110) aufgeschäumt wird,
**dadurch gekennzeichnet, dass**
ein Erstarren einer Oberfläche und von weiter innenliegenden Bereichen der geschäumten Masse (110) innerhalb einer Temperierungszone (106), die sich an das Extrusionswerkzeug anschließt, verhindert wird durch Temperieren der geschäumten Masse (110) innerhalb der Temperierungszone, wobei innerhalb der Temperierungszone (106) die geschäumte Masse in einem plastisch durch das Treibmittel verformbaren Zustand gehalten wird, und
innerhalb der Temperierungszone (106) mittels einer schwenkbaren, verschiebbaren oder drehbaren Oberfläche ein einstellbarer Anpressdruck auf eine äußere Oberfläche der geschäumten Masse (110) vollumfänglich über einen gesamten Umfang der geschäumten Masse (110) ausgeübt wird.

2. Verfahren nach Anspruch 1, wobei während des Temperierens der geschäumten Masse (110) Wärme zugeführt oder von dieser abgeführt wird, insbesondere durch körperlichen Kontakt zwischen der geschäumten Masse (110) und einer Oberfläche (122), an der die geschäumte Masse (110) vorbeigeführt wird, durch Führen einer Temperierungsströmung entlang der Masse und/oder durch Bestrahlen mit Wärmestrahlung oder Mikrowellenstrahlung.

3. Verfahren nach einem der vorangehenden Ansprüche, wobei innerhalb der Temperierungszone (106) der Anpressdruck auf die äußere Oberfläche der geschäumte Masse (110) ausgeübt wird durch Führen der geschäumten Masse entlang der Oberfläche (122), die den Anpressdruck auf die äußere Oberfläche vollumfänglich ausübt, wobei insbesondere der von der Oberfläche ausgeübte Anpressdruck mindestens so groß ist wie ein resultierender Aufschäumdruck, der von dem Treibmittel innerhalb der geschäumten Masse erzeugt wird, um den Querschnitt der geschäumten Masse lokal zu begrenzen, oder der Anpressdruck kleiner ist als der Aufschäumdruck, um den Querschnitt der geschäumten Masse (110) zu erhöhen.

4. Verfahren nach einem der vorangehenden Ansprüche, wobei die Oberfläche, welche den Anpressdruck auf die äußere Oberfläche der geschäumte Masse (110) ausübt, Wärme der geschäumten Masse zuführt oder von dieser abführt durch körperlichen Kontakt und/oder durch Wärmestrahlung.

5. Verfahren nach einem der vorangehenden Ansprüche, wobei das Extrusionswerkzeug (100), durch das das Extrudat geführt wird, eine Rundschlitzdüse mit einem umfänglich geschlossenen Schlitz (102), eine Profildüse oder eine Breitschlitzdüse umfasst, durch die hindurch das Extrudat geführt wird, um die geschäumte Masse (110) als einen ringförmigen beziehungsweise flachen oder profilierten Schaumkörper zu formen.

6. Vorrichtung zur Herstellung eines extrudierten Schaumprodukts, wobei die Vorrichtung einen Extruder (7, 8) mit einem Extrusionswerkzeug (10, 100) umfasst, die Vorrichtung ferner eine Temperierungsanordnung (120 - 170) mit einer Temperierungszone (106) aufweist, die sich an das Extrusionswerkzeug anschließt, wobei die Temperierungsanordnung (120 - 170) zumindest ein Wärmezufuhr- und/oder Wärmeabfuhrelement (120) aufweist, das in der Temperierungszone (106) vorgesehen oder mit dieser wärmeübertragend gekoppelt ist, **dadurch gekennzeichnet, dass**
die Temperierungsanordnung anhand des Wärmezufuhr- und/oder Wärmeabfuhrelements eingerichtet ist, (i) ein Erstarren einer Oberfläche und von weiter innenliegenden Bereichen eines aus dem Extrusionswerkzeug austretenden Extrudats, das innerhalb der Temperierungszone durch ein Treibmittel zu einer geschäumten Masse (110) aufschäumt, innerhalb der Temperierungszone (106) zu verhindern, und (ii) die geschäumte Masse (110) innerhalb der Temperierungszone (106) in einem plastisch durch das Treibmittel verformbaren Zustand zu halten, und
die Vorrichtung eine Anpressvorrichtung (122) aufweist, die zur Ausübung eines einstellbaren Anpressdrucks auf eine äußere Oberfläche der geschäumten Masse ausgestaltet ist, wobei die Anpressvorrichtung (122) eingerichtet ist, mittels einer schwenkbaren, verschiebbaren oder drehbaren Oberfläche den einstellbaren Anpressdruck auf die äußere Oberfläche der geschäumten Masse (110) vollumfänglich über einen gesamten Umfang der geschäumten Masse (110) auszuüben.

7. Vorrichtung nach Anspruch 6, wobei die Wärmezufuhr- und/oder Wärmeabfuhrelemente eine oder ein Kombination mehrerer gleichartiger oder unterschiedlicher der folgenden Temperierungskomponenten umfasst:
(a) eine Kontakttemperierungsanordnung mit einer Oberfläche, die mit einer Wärmequelle oder Wärmesenke der Vorrichtung wärmeübertragend gekoppelt ist, und die Oberfläche sich im Wesentlichen entlang oder parallel zu der Längsrichtung (104) der Temperierungszone (106) erstreckt;
(b) eine Temperierungsdüse (160) eingerichtet zur Abgabe von Temperierungsfluid in Form einer Temperierungsströmung, wobei die Temperierungsdüse auf die Temperierungszone gerichtet ist und die Temperierungsdüse mit einer Wärmequelle oder Wärmesenke verbunden ist;
(c) ein elektrisches Heizelement (120), ein Verbrennungsheizelement oder mit einer Wärmequelle verbundenes Heizelement, das mit einer Abstrahlfläche ausgestattet ist, die auf die Temperierungszone gerichtet ist; oder
(d) ein Mikrowellenstrahler, der auf die Temperierungszone und insbesondere auch die geschäumte Masse (110) gerichtet ist.

8. Vorrichtung nach Anspruch 6 oder 7, wobei die Anpressvorrichtung (122) insbesondere von der Temperierungsanordnung umfasst wird und die Anpressvorrichtung (122),
(i) zumindest die Oberfläche zur Abgabe des Anpressdrucks umfasst, welche sich im Wesentlichen entlang der Längsrichtung (104) des Extrusionswerkzeug (100) erstreckt, wobei das Extrusionswerkzeug geneigt auf die Oberfläche gerichtet oder entlang der Oberfläche ausgerichtet ist und derart relativ zur Oberfläche angeordnet ist, dass diese den Anpressdruck auf eine äußere Oberfläche der geschäumten Masse ausübt, die aus dem Extrusionswerkzeug austritt.

9. Vorrichtung nach Anspruch 8, wobei die Oberfläche der Kontakttemperierungsanordnung teilweise oder vollständig der Oberfläche zur Abgabe des Anpressdrucks entspricht.

10. Vorrichtung nach einem der Ansprüche 6 - 9, wobei das Extrusionswerkzeug eine Rundschlitzdüse mit einem umfänglich geschlossenen Schlitz, eine Profildüse oder eine Breitschlitzdüse umfasst.

## Claims

1. A method for producing an extruded foam product,
wherein an extrudate mixed with at least one blowing agent is guided through an extrusion tool (100), after exit from the extrusion tool, the extrudate is foamed by the blowing agent to form a foamed mass (110),
**characterized in that**
solidification of a surface and of further inside areas of the foamed mass (110) within the temperature-control zone (106), which adjoins the extrusion tool, is prevented by temperature control of the foamed mass (110) inside the temperature-control zone, wherein,
within the temperature-control zone (106), the foamed mass is maintained in a state plastically deformable by the blowing agent, and,
within the temperature-control zone (106), an adjustable contact pressure is applied to an outer surface of the foamed mass (110) entirely over an entire circumference of the foamed mass (110) by means of a pivotable, displaceable or rotatable surface.

2. The method according claim 1, wherein during the temperature control of the foamed mass (110) heat is supplied or removed from this, in particular by physical contact between the foamed mass (110) and a surface (122) along which the foamed mass (110) is passed, by guiding a temperature-control flow along the mass and/or by irradiating with thermal radiation or microwave radiation.

3. The method according to any one of the preceding claims, wherein within the temperature-control zone (106) the contact pressure is applied to the outer surface of the foamed mass (110) by guiding the foamed mass along the surface (122) which applies the contact pressure to the outer surface in its entirety, wherein in particular the contact pressure applied by the surface is at least as high as a resulting foaming pressure which is produced by the blowing agent inside the foamed mass in order to locally delimit the cross-section of the foamed mass or the contact pressure is lower than the foaming pressure in order to increase the cross-section of the foamed mass (110).

4. The method according to any one of the preceding claims, wherein the surface which applies the contact pressure to the outer surface of the foamed mass (110), supplies heat to the foamed mass or removes heat from it by physical contact and/or by thermal radiation.

5. The method according to any one of the preceding claims, wherein the extrusion tool (100) through which the extrudate is guided, comprises a round-slot nozzle having a circumferentially closed slot (102), a profile nozzle or a wide-slot nozzle through which the extrudate is guided in order to form the foamed mass (110) as an annular or flat or profiled foam body.

6. Device for producing an extruded foam product, wherein the device comprises an extruder (7, 8) with an extrusion tool (10, 100),
the apparatus further comprises (120-170) a temperature-control arrangement (120 - 170) with a temperature-control zone (106) which adjoins the extrusion tool, wherein the temperature-control arrangement (120 - 170) has at least one heat supply and/or heat removal element (120, 122) which is provided in the temperature-control zone (106) or which is coupled to said temperature-control zone in a heat-transmitting manner, **characterized in that**
the temperature-control arrangement is adapted by means of the heat supply and/or heat removal element (i) to prevent, within the temperature-control zone, solidification of a surface and of further inside areas of an extrudate exiting the extrusion tool, which extrudate, within the temperature-control zone, foams to a foamed mass (110) by a blowing agent, and (ii) to maintain, within the temperature-control zone (106), the foamed mass (110) in a state plastically deformable by the blowing agent, and
the device comprises a pressing device (122) which is configured to apply an adjustable contact pressure onto an outer surface of the foamed mass, wherein the pressing device (122) is configured, by means of a pivotable, displaceable or rotatable surface, to apply the adjustable contact pressure to an outer surface of the foamed mass (110) entirely over an entire circumference of the foamed mass (110).

7. The device according to claim 6, wherein the heat supply and/or heat removal elements comprise one or a combination of several same-type or different ones of the following temperature-control components:
(a) a contact temperature-control arrangement with a surface which is coupled to a heat source or heat sink of the device in a heat-transmitting manner and the surface extends substantially along or parallel to the longitudinal direction (104) of the temperature control zone (106);
(b) a temperature-control nozzle (160) adapted for dispensing temperature-control fluid in the form of a temperature-control flow, wherein the temperature-control nozzle is directed onto the temperature-control zone and the temperature-control nozzle is connected to a heat source or heat sink;
(c) an electrical heating element (120), a combustion heating element or heating element connected to a heat source which is equipped with an emitting surface which is directed onto the temperature-control zone; or
(d) a microwave emitter which is directed onto the temperature-control zone and in particular the foamed mass (110).

8. The device according to claim 6 or 7, wherein the pressing device (122) is in particular comprised by the temperature-control arrangement, and the pressing device (122)
(i) comprises at least the surface for delivering the contact pressure, which extends substantially along the longitudinal direction (104) of the extrusion tool (100), wherein the extrusion tool is directed in an inclined manner onto the surface or is aligned along the surface and is disposed in such a manner relative to the surface that this applies the contact pressure onto an outer surface of the foamed mass which exits from the extrusion tool.

9. The device according to claim 8, wherein the surface of the contact temperature-control arrangement corresponds partially or completely to the surface for delivering the contact pressure.

10. The device according to any one of claims 6 - 9, wherein the extrusion tool comprise a round-slot nozzle having a circumferentially closed slot, a profile nozzle or a wide-slot nozzle.

## Revendications

1. Procédé pour fabriquer un produit alvéolaire extrudé,
dans lequel un extrudat mélangé avec au moins un agent d'expansion est acheminé à travers un outil d'extrusion (100), l'extrudat est expansé à la sortie de l'outil d'extrusion par l'agent d'expansion en une masse expansée (110),
**caractérisé en ce que**
une solidification d'une surface et de zones situées davantage à l'intérieur de la masse expansée (110) à l'intérieur d'une zone d'équilibrage de température (106), qui est adjacente à l'outil d'extrusion, est empêchée par l'équilibrage de température de la masse expansée (110) à l'intérieur de la zone d'équilibrage de température, dans lequel, à l'intérieur de la zone d'équilibrage de température (106), la masse expansée est maintenue dans un état pouvant être déformé plastiquement par l'agent d'expansion, et
à l'intérieur de la zone d'équilibrage de température (106), une pression d'application réglable est exercée sur une surface extérieure de la masse expansée (110) de manière complète sur toute une périphérie de la masse expansée (110) au moyen d'une surface pivotante, mobile ou rotative.

2. Procédé selon la revendication 1, dans lequel, pendant l'équilibrage de température, de la chaleur est amenée à la masse expansée (110) ou évacuée de celle-ci, en particulier par contact corporel entre la masse expansée (110) et une surface (122) devant laquelle la masse expansée (110) est amenée à passer, par acheminement d'un écoulement d'équilibrage de température le long de la masse et/ou par exposition à un rayonnement thermique ou rayonnement micro-ondes.

3. Procédé selon l'une quelconque des revendications précédentes, dans lequel, à l'intérieur de la zone d'équilibrage de température (106), la pression d'application est exercée sur la surface extérieure de la masse expansée (110) par acheminement de la masse expansée le long de la surface (122), qui exerce de manière complète la pression d'application sur la surface extérieure, dans lequel en particulier la pression d'application exercée par la surface est au moins aussi grande qu'une pression d'expansion résultante, qui est produite par l'agent d'expansion à l'intérieur de la masse expansée, afin de délimiter localement la section transversale de la masse expansée, ou la pression d'application est inférieure à la pression d'expansion, afin d'augmenter la section transversale de la masse expansée (110).

4. Procédé selon l'une quelconque des revendications précédentes, dans lequel la surface, laquelle exerce la pression d'application sur la surface extérieure de la masse expansée (110), amène de la chaleur à la masse expansée ou l'évacué de celle-ci par contact corporel et/ou par rayonnement thermique.

5. Procédé selon l'une quelconque des revendications précédentes, dans lequel l'outil d'extrusion (100), à travers lequel l'extrudat est acheminé, comprend une filière à fente ronde avec une fente (102) fermée sur sa périphérie, une filière profilée ou une filière plate, à travers laquelle l'extrudat est acheminé, afin de former la masse expansée (110) en tant que corps alvéolaire annulaire voire plat ou profilé.

6. Dispositif pour fabriquer un produit alvéolaire extrudé, dans lequel le dispositif comprend une extrudeuse (7, 8) avec un outil d'extrusion (10, 100), le dispositif présente en outre un ensemble d'équilibrage de température (120 - 170) avec une zone d'équilibrage de température (106), qui est adjacente à l'outil d'extrusion, dans lequel l'ensemble d'équilibrage de température (120 - 170) présente au moins un élément d'amenée de chaleur et/ou d'évacuation de chaleur (120), qui est prévu dans la zone d'équilibrage de température (106) ou est couplé à celle-ci avec transfert de chaleur, **caractérisé en ce que**
l'ensemble d'équilibrage de température est conçu, sur la base de l'élément d'amenée de chaleur et/ou d'évacuation de chaleur, (i) pour empêcher, à l'intérieur de la zone d'équilibrage de température (106), une solidification d'une surface et de zones situées davantage à l'intérieur d'un extrudat sortant de l'outil d'extrusion, qui s'expand à l'intérieur de la zone d'équilibrage de température par l'intermédiaire d'un agent d'expansion en une masse expansée (110), et (ii) pour maintenir la masse expansée (110) à l'intérieur de la zone d'équilibrage de température (106) dans un état pouvant être déformé plastiquement par l'agent d'expansion, et
le dispositif présente un dispositif d'application (122), qui est configuré pour exercer une pression d'application réglable sur une surface extérieure de la masse expansée, dans lequel le dispositif d'application (122) est conçu pour exercer la pression d'application réglable sur la surface extérieure de la masse expansée (110) de manière complète sur toute une périphérie de la masse expansée (110) au moyen d'une surface pivotante, mobile ou rotative.

7. Dispositif selon la revendication 6, dans lequel les éléments d'amenée de chaleur et/ou d'évacuation de chaleur comprend un ou une combinaison de plusieurs, de même nature ou différents, des composants d'équilibrage de température suivants :
(a) un ensemble d'équilibrage de température de contact avec une surface qui est couplée avec transfert de chaleur à une source de chaleur ou un dissipateur thermique du dispositif, et la surface s'étend sensiblement le long de la direction longitudinale (104) de la zone d'équilibrage de température (106) ou parallèlement à celle-ci ;
(b) une buse d'équilibrage de température (160) conçue pour distribuer un fluide d'équilibrage de température sous forme d'un écoulement d'équilibrage de température, dans lequel la buse d'équilibrage de température est dirigée sur la zone d'équilibrage de température et la buse d'équilibrage de température est reliée à une source de chaleur ou à un dissipateur thermique ;
(c) un élément chauffant électrique (120), un élément chauffant à combustion ou un élément chauffant relié à une source de chaleur, qui est équipé d'une surface d'émission qui est dirigée sur la zone d'équilibrage de température ; ou
(d) un élément rayonnant à micro-ondes, qui est dirigé sur la zone d'équilibrage de température et en particulier également la masse expansée (110).

8. Dispositif selon la revendication 6 ou 7, dans lequel le dispositif d'application (122) est compris en particulier par l'ensemble d'équilibrage de température et le dispositif d'application (122),
(i) comprend au moins la surface permettant la distribution de la pression d'application, laquelle s'étend sensiblement le long de la direction longitudinale (104) de l'outil d'extrusion (100), dans lequel l'outil d'extrusion est dirigé sur la surface de manière inclinée ou orienté le long de la surface et disposé par rapport à la surface de telle sorte que celle-ci exerce la pression d'application sur une surface extérieure de la masse expansée, qui sort de l'outil d'extrusion.

9. Dispositif selon la revendication 8, dans lequel la surface de l'ensemble d'équilibrage de température de contact correspond partiellement ou entièrement à la surface permettant la distribution de la pression d'application.

10. Dispositif selon l'une quelconque des revendications 6 - 9, dans lequel l'outil d'extrusion comprend une filière à fente ronde avec une fente fermée sur sa périphérie, une filière profilée ou une filière plate.
